# FASCICULE DE BREVET EUROPEEN

(11) **EP 1 069 507 B1**
(45) Date de publication et mention de la délivrance du brevet: **10.10.2007**
(21) Numéro de dépôt: 00401701.8
(22) Date de dépôt: 15.06.2000
(51) Int. Cl.: G06F 12/12

(54) **Processus de libération de pages pour mécanisme d'adressage virtuel**
Prozess zur Seitenfreigebung für virtuellen Adressierungsmechanismus
Page deallocation process for virtual addressing mechanism

(30) Priorité: 21.06.1999 FR 9907841
(43) Date de publication de la demande: 17.01.2001
(73) Titulaire: BULL S.A., 78430 Louveciennes (FR)
(72) Inventeur: Comment, Alain, 38130 Echirolles (FR)

(56) Documents cités:
- EP-A- 0 788 053
- WO-A-94/18625

## Description

Le domaine de l'invention est celui des systèmes informatiques dont un système d'exploitation comprend un mécanisme d'adressage virtuel et plus précisément celui des processus de libération de pages physiques, au sein du système d'exploitation, en vue de les mettre en correspondance avec des pages virtuelles utilisées par des processus applicatifs.

Les mécanismes d'adressage virtuel sont connus, par exemple des brevets ou demandes de brevets US4279014, FR9801701. Un mécanisme d'adressage virtuel permet de mettre à disposition du ou des processeurs d'une machine informatique, un espace de mémoire virtuelle qui n'est pas limité par la taille de la mémoire physique de la machine. A une page virtuelle de l'espace de mémoire virtuelle, utilisée par la machine correspond une page physique (frame en anglais) de la mémoire physique de la machine, des numéros de pages en correspondance sont répertoriées dans une table de correspondance. Lorsqu'un processeur a besoin d'utiliser une page virtuelle pour laquelle il n'existe pas de page physique disponible en mémoire, le système d'exploitation déclenche un processus de libération de pages physique.

Divers processus de libération sont connus de l'état de la technique tels que par exemple les processus de type LRU (Least Recently Used en anglais) qui libèrent les pages physiques les moins récemment utilisées. Ce type de processus est décrit par exemple dans le brevet EP0394115.

Le brevet W09418625 décrit un procédé de remplacement de pages dans une table de pages de type LRU proposant un champ "access bit" indiquant si la page a été référencée depuis un certain laps de temps et une politique adéquate de déclenchement de ce procédé de remplacement de pages.

Selon l'état de la technique connu pour mettre en oeuvre un processus de type LRU, chaque ligne de la table de correspondance comprend un indicateur de référence. Lorsqu'un processeur accède à un numéro de page virtuelle pour laquelle il existe une ligne de la table de correspondance contenant un numéro de page physique, le processeur met l'indicateur de référence de cette ligne à un premier état pour indiquer qu'il vient d'accéder à cette ligne. Lorsqu'il est nécessaire de libérer des numéros de page physique en vue de les mettre en correspondance avec de nouveaux numéros de page virtuels, le processus de libération parcourt cycliquement la table de correspondance jusqu'à trouver un indicateur de référence mis à un deuxième état. Sur chaque ligne pour laquelle le processus de libération a détecté un indicateur de référence mis sur le premier état, le processus le met au deuxième état pour indiquer qu'il vient de scruter cette ligne. Ainsi, lorsque le processus scrute à nouveau l'indicateur de référence d'une ligne, celui-ci sera encore sur le deuxième état si aucun processeur ne l'a remis au premier état entre temps. Les indicateurs restés sur le deuxième état sont ceux de lignes moins récemment utilisées que celles pour lesquelles l'indicateur de référence a été remis au premier état entre deux scrutations successives de cette ligne par le processus de libération. L'indicateur de référence établit donc un vieillissement d'utilisation de la ligne qui le contient en fonction du temps de cycle de parcours de la table de correspondance par le processus de libération, sans possibilité d'accélérer un vieillissement préférentiel de certaines lignes contenant des numéros de pages à libérer plus rapidement que d'autres.

Ce besoin peut se présenter par exemple pour limiter une consommation de pages physiques par un processus en libérant en priorité les pages qui lui ont été allouées. Le problème qui se pose est celui de pouvoir favoriser la libération de certaines pages sans pour autant libérer des pages récemment utilisées.

L'invention a pour objet un processus de libération de pages physiques pour mécanisme d'adressage virtuel au moyen d'un premier pointeur sur une première ligne de table de correspondance contenant un indicateur mis à un premier état par un processeur, ledit processus mettant l'indicateur à un deuxième état si l'état est le premier état et libérant ladite première ligne si l'état est le deuxième état. Le processus est caractérisé en ce qu'il met l'indicateur, mis au premier état par le processeur sur une deuxième ligne de la table de correspondance, au deuxième état au moyen d'un deuxième pointeur sur la deuxième ligne sur indication d'une valeur d'attribut pour ladite deuxième ligne.

La description d'une mise en oeuvre particulière de l'invention, suit en référence aux figures où:
- la figure 1 représente une table de correspondance entre numéros de pages virtuelles et numéros de pages physique;
- la figure 2 représente un processus de libération de pages équiprobable; - la figure 3 représente un premier processus de libération de pages à probabilité différenciée;
- la figure 4 représente un dispositif de parcours de table à plusieurs pointeurs.
- la figure 5 représente un deuxième processus de libération de pages à probabilité différenciée.
- la figure 6 représente un moyen pour calculer une couleur de page.
- la figure 7 représente un processus de libération de pages pour contrôler une consommation mémoire de processus applicatifs.

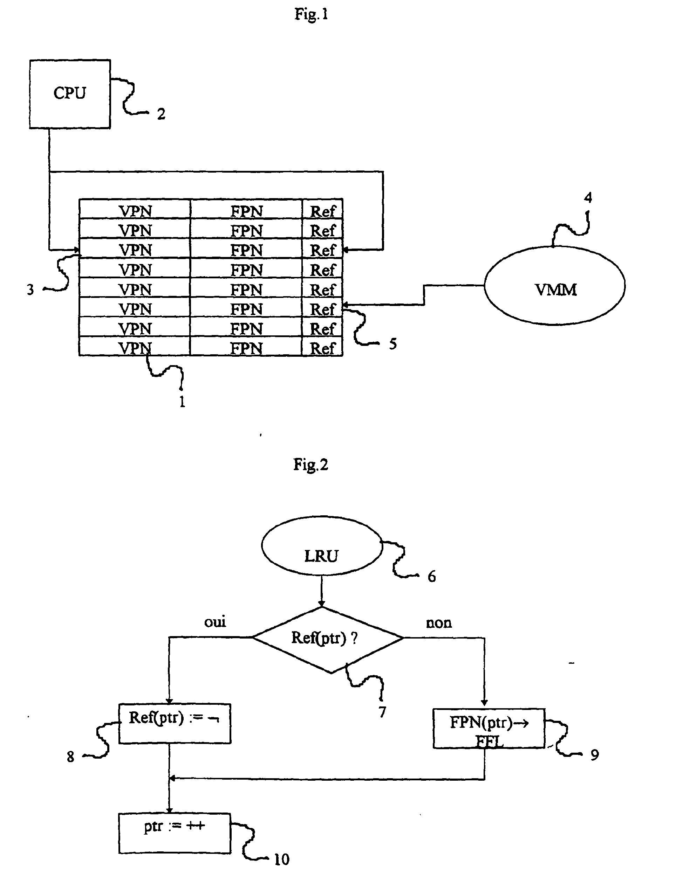

L'objet de la description en référence à la figure 1 n'est pas de détailler les mécanismes connus de mémoire virtuelle mais simplement d'en résumer les principales caractéristiques pour une bonne compréhension de la suite du texte. Une table de correspondance 1 comprend trois champs. Un premier champ est destiné à contenir un numéro de page virtuelle VPN. Un deuxième champ est destiné à contenir un numéro de page physique FPN. Un troisième champ est destiné à contenir un indicateur de référence Ref. Dans un mécanisme de mémoire virtuelle, on distingue les accès à et les traitement de la table 1, matériels d'une part et logiciels d'autre part.

En ce qui concerne la part matérielle, un processeur 2 de type unité centrale de traitement CPU, accède en lecture ou en écriture à une adresse virtuelle au moyen d'un numéro de page virtuelle VPN. Dans une architecture multiprocesseur, "le processeur" signifie "l'un des processeurs". Le processeur 2 recherche dans la table 1, une ligne 3 contenant le numéro de page virtuelle VPN. Si cette ligne existe, elle contient un numéro de page physique FPN qui permet au processeur 2 d'accéder réellement en mémoire physique de la machine. Le processeur 2 met alors l'indicateur Ref de la ligne 3 à l'état "référencée" pour signaler qu'il vient d'accéder à la page physique de numéro FPN. Comme expliqué par la suite, l'indicateur Ref sert à distinguer les pages plus récemment utilisées des pages moins récemment utilisées. Si cette ligne n'existe pas, un défaut de page est généré qui fait appel à un gestionnaire 4 de mémoire virtuelle VMM.

En ce qui concerne la part logicielle, le gestionnaire 4 modifie le contenu de la table 1 de façon à faire correspondre un numéro de page FPN au numéro de page VPN pour résoudre le défaut de page. S'il existe au moins une ligne libre dans la table 1, c'est à dire une ligne pour laquelle un numéro de page VPN ne correspond pas à un numéro de page FPN, le gestionnaire 4 écrit le numéro de page virtuelle VPN dans le premier champ de cette ligne de façon à lui faire correspondre un numéro de page physique FPN. S'il n'existe pas de ligne libre dans la table 1, le gestionnaire 4 parcourt la table 1 au moyen d'un pointeur ptr pour activer un processus de libération sur une ligne 5 pointée par le pointeur ptr.

La figure 2 représente schématiquement un exemple de processus de libération connu sous le nom de LRU (Least Recently Used en anglais). Le processus LRU est ainsi nommé car il libère la ligne de la table 1, contenant le numéro de la page parmi celles les moins récemment utilisées par le processeur 2.

Le gestionnaire 4 active le processus de libération qui débute en une étape 6 avec une valeur de pointeur ptr égale à un numéro de ligne de la table 1. A l'initialisation du gestionnaire 4, la valeur du pointeur ptr est égale au numéro de la première ligne de la table 1. L'étape 6 est suivie par une étape 7 qui lit l'état de indicateur Ref contenu dans la ligne 5 pointée par ptr. Un test est effectué pour savoir si cet état est celui "référencée".

Si la réponse au test est oui, cela signifie que le processeur 2 a accédé à la page dont le numéro est contenu dans la ligne 5, avant que le pointeur ptr n'arrive sur cette ligne. Cette page est considérée comme récemment utilisée. Une étape 8 succède alors à l'étape 7. En étape 8, l'indicateur Ref est mis sur un état "non référencée". Une étape 10 succède à étape 8 pour incrémenter le pointeur ptr. Lorsque le pointeur ptr est sur la dernière ligne de la table 1, son incrémentation le replace sur la première ligne de la table 1. Ainsi le pointeur ptr permet de parcourir la table 1 de façon cyclique. Lorsque le pointeur ptr arrivera à nouveau sur la ligne 5, l'indicateur Ref sera à l'état "référencée" si et seulement si le processeur 2 a accédé entre temps à la page dont le numéro est contenu dans la ligne 5.

Si la réponse au test est non, cela signifie que le processeur 2 n'a pas accédé à la page dont le numéro est contenu dans la ligne 5, avant que le pointeur ptr n'arrive sur cette ligne. Cette page est considérée comme non récemment utilisée. Une étape 9 succède alors à étape 7. En étape 9, la ligne 5 est libérée en mettant le numéro de page physique FPN dans une liste FFL de pages libres.. L'étape 10 succède à l'étape 9.

Ainsi, après que le processeur 2 ait mis indicateur Ref de la ligne 5 à l'état "référencée" par accès à la page de numéro VPN de cette ligne, un premier passage du pointeur ptr sur la ligne 5 remet l'indicateur Ref à l'état "non référencée". La page de numéro FPN correspondante sera libérée au deuxième passage du pointeur ptr sur la ligne 5 si le processeur 2 n'a pas accédé à la page de numéro VPN entre le premier et le deuxième passage du pointeur ptr.

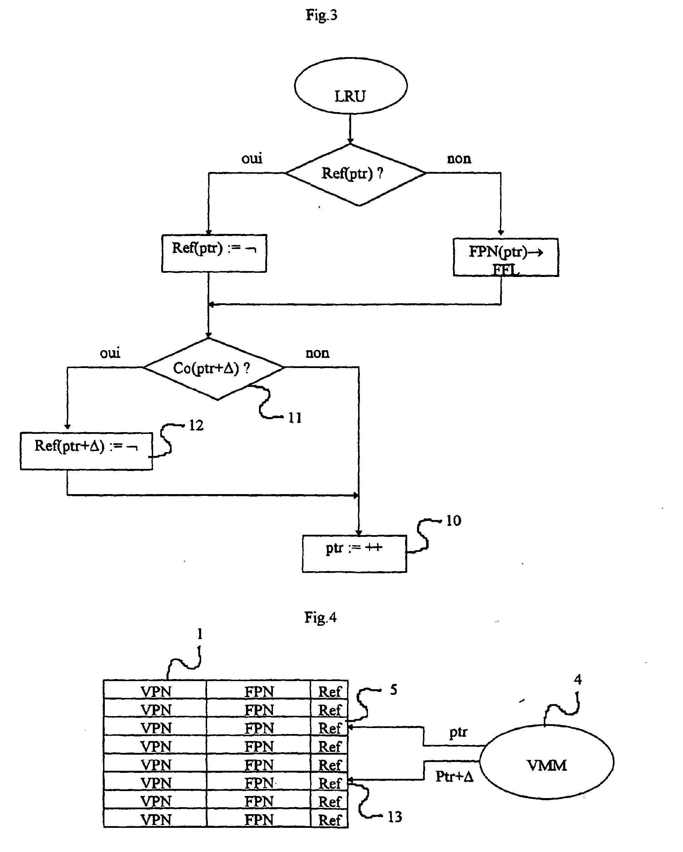

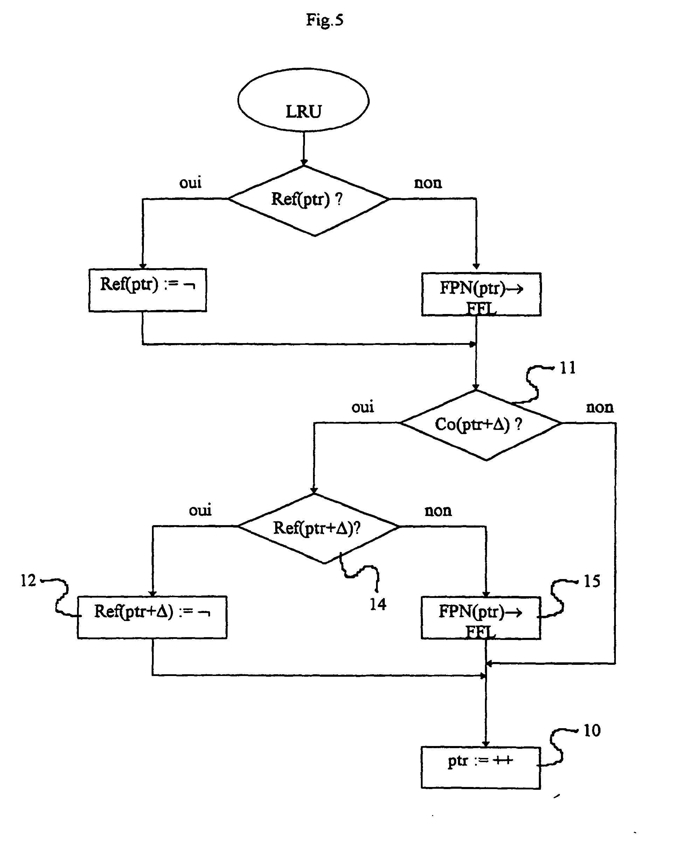

Dans le processus en référence à la figure 3, un deuxième pointeur ptr+Δ est utilisé dans des étapes supplémentaires 11, 12. La valeur du pointeur ptr+Δ est égale à la valeur du pointeur ptr à laquelle est ajouté un déplacement Δ exprimé en nombre de lignes. Le pointeur ptr+Δ est donc en avance dans la table 1 de quelques lignes sur le pointeur ptr, par exemple à la ligne 13 en référence à la figure 4.

Le système d'exploitation de la machine est muni d'instructions qui permettent d'affecter un attribut de valeur nommée couleur Co à un processus applicatif exécuté par la machine. Cet attribut a pour fonction de déterminer un degré de persistance admissible des numéros de page virtuelle VPN dans la table 1, appartenant à un segment du processus applicatif. Par exemple, une couleur dite verte indique de remplacer la page à une fréquence normale correspondant à un parcours complet de la table 1. Une couleur dite orange indique de remplacer la page avec une fréquence plus grande. Ces instructions déclenchent la mise en oeuvre du processus en référence à la figure 3.

En étape 11 est mesurée la couleur Co correspondant au numéro de page VPN contenu dans la ligne 13 pointée par le pointeur ptr+Δ. Un test est effectué pour savoir si la couleur Co indique un faible degré de persistance admissible. Si la réponse est non, l'étape 10 succède à étape 11, de sorte que le processus en référence à la figure 3 ne procure pas à ce stade, d'effet supplémentaire par rapport au processus en référence à la figure 2. Les pages de couleur verte sont remplacées avec la même fréquence de parcours de la table 1 que précédemment.

Si la réponse est oui, l'étape 12 succède à l'étape 11. En étape 12, l'indicateur Ref de la ligne 13 est mis à l'état "non référencée". Le résultat est un vieillissement prématuré de l'utilisation de la page physique de numéro FPN contenu à la ligne 13 de la table 1. En effet, l'indicateur Ref n'attend pas que le pointeur ptr arrive sur la ligne 13 pour être forcé à l'état "non référencée". Pour libérer la ligne 13, il n'est pas nécessaire que la page physique de numéro FPN n'est pas été accédée par le processeur 2 sur un cycle complet de parcours de la table 1 par le pointeur ptr. Il suffit que la page n'est pas été accédée pendant le temps mis par le pointeur ptr pour être incrémenté d'un nombre de lignes égal à Δ. La probabilité de remplacer une page de couleur orange est différenciée de la probabilité de remplacer une page de couleur verte.

Il est possible de définir une troisième couleur, par exemple une couleur dite rouge avec une probabilité de libération de page encore plus forte que pour la couleur orange en définissant un troisième pointeur ptr+Δ+δ tel que l'indicateur Ref d'une ligne pointée par ptr+Δ+δ soit mis à l'état "non référencée" si la page est de couleur rouge, indicateur Ref d'une ligne pointée par ptr+Δ soit mis à l'état "non référencée" si la page est de couleur rouge ou orange.

En faisant évaluer dynamiquement la valeur de Δ, il est possible de réguler la consommation de pages.

Dans le cas de deux couleurs, une valeur préférée pour le déplacement Δ est égale à la moitié du nombre de lignes de la table 1. Ceci permet de déréférencer les lignes avec des pages oranges deux fois plus vite que les lignes avec des pages vertes. Pour un nombre quelconque n de couleurs avec une table à N lignes, on définit alors n pointeurs ptr, ptr+N/n, ptr+2N/n,..., ptr+(n-1)N/n.

Le processus en référence à la figure 5 est une variante du processus en référence à la figure 3 qui permet de libérer des pages oranges deux fois plus vite que des pages vertes. Si une page orange est détectée en étape 11, réponse oui au test expliqué précédemment, une étape 14 succède à l'étape 11. L'étape 14 lit l'état de l'indicateur Ref contenu dans la ligne 13 pointée par ptr+Δ. Un test est effectué pour savoir si cet état est celui "référencée".

Si la réponse au test est oui, cela signifie que le processeur 2 a accédé à la page dont le numéro est contenu dans la ligne 13, avant que le pointeur ptr+Δ n'arrive sur cette ligne. Cette page est considérée comme récemment utilisée. L'étape 12 succède alors à étape 14. En étape 14, l'indicateur Ref est mis sur un état "non référencée". L'étape 10 succède à étape 12 pour incrémenter le pointeur ptr. Lorsque le pointeur ptr+Δ est sur la dernière ligne de la table 1, l'incrémentation du pointeur ptr replace le pointeur ptr+Δ sur la première ligne de la table 1. Ainsi le pointeur ptr+Δ permet de parcourir la table 1 de façon cyclique. Lorsque le pointeur ptr+Δ arrivera sur la ligne 13, indicateur Ref sera à l'état "référencée" si et seulement si le processeur 2 a accédé à la page dont le numéro est contenu dans la ligne 13 depuis le dernier passage du pointeur ptr sur cette ligne, soit un demi cycle de parcours de la table 1.

Si la réponse au test est non, cela signifie que le processeur 2 n'a pas accédé à la page dont le numéro est contenu dans la ligne 13, entre l'instant où le pointeur ptr est précédemment passé sur cette ligne et celui où le pointeur ptr+Δ est arrivé sur cette ligne. Cette page, reconnue orange par l'étape 11, est considérée comme non récemment utilisée. Une étape 15 succède alors à l'étape 14. En étape 15, la ligne 13 est libérée en mettant le numéro de page physique FPN dans une liste FFL de pages libres. L'étape 10 succède à l'étape 15. Lorsque la valeur de Δ est égale à la moitié du nombre de lignes de la table 1, les pages oranges sont remplacées avec une probabilité double de celle des pages vertes.

En favorisant la libération de certaines pages, le processus de libération décrit ci-dessus permet de contrôler la consommation de mémoire par des processus applicatifs exécutés sur la machine. Pour cela, les processus applicatifs ou des flots d'instructions (thread en anglais) de processus, sont regroupés par classes.

A chaque classe sont attribués un compteur et trois valeurs de seuil. Le compteur est destiné à mesurer une quantité Q de pages physiques consommées par les processus et flots d'instructions de la classe. La première valeur Min, indique une quantité minimale de pages physiques à réserver pour la classe. La deuxième valeur Opt, indique une quantité optimale de pages physiques consommables par les processus et flots d'instructions de la classe. La troisième valeur Max, indique une quantité maximale de pages physiques consommables par les processus et flots d'instructions de la classe.

Conformément aux procédés connus de gestion de mémoire virtuelle, un accès à un numéro de page virtuelle VPN pour lequel il n'existe pas de correspondance dans la table 1, par le processeur 2 exécutant un flot d'instruction Th1, génère un défaut de page. Pour résoudre le défaut de page, le gestionnaire de mémoire virtuelle 4 prend un numéro de page physique FPN dans la liste de pages libres FFL pour le mettre en correspondance avec le numéro de page virtuelle VPN dans la table 1. Si la liste de pages libres FFL est vide, le gestionnaire 4 déclenche le processus de libération de page LRU pour alimenter la liste FFL et résoudre le défaut de page.

Pour mettre en oeuvre invention, à chaque résolution d'un défaut de page, le gestionnaire 4 recherche la classe à laquelle appartient le flot d'instruction Thl pour lequel le défaut de page a été généré et marque le numéro de page FPN ayant résolu le défaut de page, avec un identificateur Cid de la classe. Le gestionnaire 4 incrémente la valeur Q du compteur de la classe. Ainsi, la valeur Q représente la quantité de pages physiques consommée par la classe.

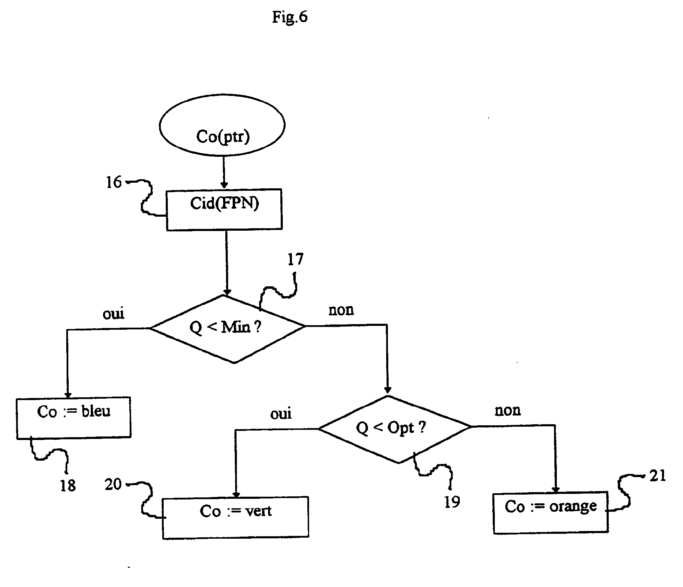

La figure 6 montre un moyen pour calculer la couleur d'un numéro de page FPN contenu dans une ligne de la table 1 pointée par le pointeur ptr, ptr+Δ. Une étape 16 détermine la classe pour laquelle la page de numéro FPN est consommée, par son identificateur Cid.

Une étape 17 teste si la quantité Q du compteur attribué à la classe est inférieure à la valeur Min pour cette classe. Si la réponse est oui, une couleur "bleu" est signalée en étape 18.

Si la réponse est non, une étape 19 teste si la quantité Q du compteur attribué à la classe est inférieure à la valeur Opt pour cette classe. Si la réponse est oui, une couleur "verte" est signalée en étape 20. Si la réponse est non, une couleur "orange" est signalée en étape 21.

Selon la figure 6, la valeur d'attribut Co est obtenue au moyen d'une fonction recevant en paramètres la consommation de pages physique par la classe d'identificateur Cid, donnée par la quantité Q du compteur. Les valeurs discrètes "bleu", "vert", "orange", peuvent être remplacées par des valeurs numériques de sorte que la fonction évolue de façon continue comme une fonction polynomiale d'un rapport entre la quantité consommée et la quantité totale de mémoire. A une série de valeurs VSi de cette fonction correspond une série de pointeurs ptrᵢ telle que indicateur de référence Ref de la ligne pointée par le pointeur ptrᵢ est mis au deuxième état "non-référencée" pour toute valeur de la fonction supérieure à la valeur VSi.

Par exemple, le pointeur ptr₁ met l'indicateur Ref à l'état "non-référencé" lorsque la valeur de Q dépasse VS1. Les pointeurs ptr₁ et ptr₂ mettent l'indicateur Ref à l'état "non-référencé" lorsque la valeur de Q dépasse VS2, supérieure à VS1. Les pointeurs ptr₁ et ptr₂ et deux pointeurs ptr₃ mettent l'indicateur Ref à l'état "non-référencé" lorsque la valeur de Q dépasse VS3, supérieure à VS2. On remarque qu'avec plusieurs valeurs VSi, il est possible d'accélérer un vieillissement de pages au fur est à mesure que la consommation augmente, ce qui permet d'éviter d'atteindre un maximum autorisé.

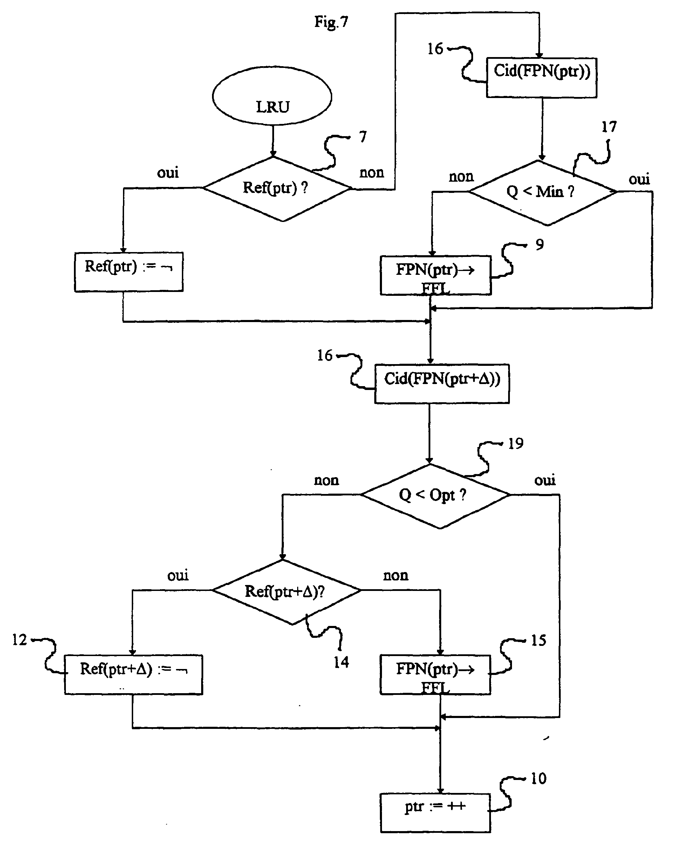

En référence à la figure 7, les étapes de la figure 6 sont exécutées en tant que de besoin dans le processus de libération de pages tel que décrit en référence à la figure 5.

Lorsque le pointeur ptr pointe sur la ligne 5 de la table 1, l'étape 16 est activée de façon à déterminer par son identificateur Cid, la classe pour laquelle la page de numéro FPN sur la ligne 5, est consommée. A la suite de étape 16, l'étape 17 teste si la quantité Q du compteur attribué à la classe est inférieure à la valeur Min pour cette classe. Si la réponse est non, le numéro de page FPN de la ligne 5 est mis dans la liste FFL de pages libres lorsque indicateur de référence Ref(ptr) est au deuxième état. Ainsi la ligne 5 est libérée si elle n'est pas de couleur bleue.

Si la réponse est oui, étape 9 n'est pas exécutée. De la sorte, tant que la couleur pour une classe est bleue, les pages consommées par cette classe ne sont pas libérées. Ceci assure un minimum de pages réservées pour la classe.

Le pointeur ptr+Δ pointant sur la ligne 13 de la table 1, l'étape 16 est activée de façon à déterminer par son identificateur Cid, la classe pour laquelle la page de numéro FPN sur la ligne 13, est consommée. A la suite de l'étape 16, l'étape 19 teste alors si la quantité Q du compteur attribué à la classe est inférieure à la valeur Opt pour cette classe. Si la réponse est non, le numéro de page FPN de la ligne 13 est mis dans la liste FFL de pages libres lorsque l'indicateur de référence Ref(ptr+Δ) est au deuxième état. Ainsi la ligne 13 est libérée si elle n'est pas de couleur verte ou bleue.

Si la réponse est oui, étape 15 n'est pas exécutée. De la sorte, tant que la couleur pour une classe est verte, les pages consommées par cette classe ne sont pas libérées par la scrutation du pointeur ptr+Δ. Les pages de couleur verte sont libérables par le seul pointeur ptr. Les pages de couleur orange sont libérables par le pointeur ptr et par le pointeur ptr+Δ, elles ont donc tendance à être libérées deux fois plus vite que les pages de couleur verte.

Lorsque suffisamment de pages d'une classe dans la couleur orange sont libérées, la valeur Q du compteur de cette classe retombe naturellement en dessous de la valeur Opt qui ramène la classe dans la couleur verte. Le processus de libération de page selon invention permet de contrôler la consommation de pages d'une classe de processus ou de flots d'instructions pour la maintenir entre deux valeurs Min et Opt déterminées pour cette classe.

Pour éviter que la consommation de page d'une classe atteigne la valeur Max, il est possible de définir une ou plusieurs couleurs supplémentaire, par exemple rouge avec des pointeurs supplémentaires sur la table 1 selon l'enseignement des explications précédentes. Pour ne pas dépasser la valeur Max, il est recommandé de mettre alors les processus et flots d'instruction de cette classe en sommeil jusqu'à revenir dans une couleur orange, voire verte. Un autre processus de libération de pages, indépendant des défauts de pages est alors déclenché par la mise en sommeil de processus applicatifs. Cet autre processus de libération de pages parcourt la table 1 pour libérer systématiquement toutes les pages détectées rouges jusqu'à ce que la classe quitte la couleur rouge, à la suite de quoi les processus et flots d'instruction en sommeil sont réveillés.

L'enseignement de l'invention ne se limite pas à la mise en oeuvre particulière présentée ci-dessus. Il est aussi intéressant d'utiliser invention dans un mécanisme d'antémémoire (cache en anglais). Un mécanisme antémémoire est un mécanisme connu qui permet de mémoriser temporairement des données d'une mémoire à accès dit lent, dans une mémoire à accès dit rapide pour permettre à un processeur ou à un groupe de processeurs d'accéder plus rapidement à ces données. La mémoire à accès rapide est constituée d'un nombre limité de lignes pour contenir les données de la mémoire à accès lent, momentanément utilisées par le ou les processeurs. Un mécanisme de libération de lignes permet de charger de nouvelles données dans la mémoire à accès rapide.

En voyant une certaine analogie entre les mécanismes d'adressage virtuel et les mécanismes d'antémémoire, une ligne 5 de la table de correspondance 1 est assimilable à une ligne de mémoire rapide. Dans un mécanisme d'adressage virtuel, la mémoire physique se comporte comme une mémoire à accès rapide, en comparaison de la mémoire virtuelle qui nécessite parfois de rapatrier des pages depuis des éléments de stockage de masse, à accès relativement plus lent.

Au moyen d'un premier pointeur ptr sur une ligne 5 de mémoire à accès rapide contenant un indicateur Ref mis à un premier état "référencée" par un processeur 2, le processus de libération pour mécanisme d'antémémoire met l'indicateur Ref à un deuxième état "non-référencée" si l'état est "référencée" et libère la ligne 5 si l'état est "non-référencée". Le processus met un indicateur Ref, mis au premier état "référencée" par le processeur 2 sur une ligne 13 de ladite mémoire à accès rapide, à un deuxième état "non-référencée" si l'état est "référencée" au moyen d'un deuxième pointeur ptr+Δ sur la ligne 13 sur indication d'une valeur d'attribut Co pour ladite ligne 13.

Le processus est par exemple exécuté au moyen d'instructions câblées dans le mécanisme d'antémémoire pour chaque mémoire à accès rapide. L'attribut de couleur est par exemple déterminé en fonction d'un type de données tel que celui du segment auquel appartiennent ces données ou paramétrable au moyen de registres mis spécialement à disposition des couches logicielles.

## Revendications

1. Processus de libération de pages physiques pour mécanisme d'adressage virtuel utilisant un premier pointeur (ptr) parcourant une table de correspondance (1) de manière cyclique, chaque ligne de la table de correspondance contenant un indicateur (Ref) mis dans un état « Référencé » pour signaler qu'un processeur (2)vient d'accéder à cette ligne, ledit processus mettant l'indicateur (Ref)d'une ligne pointée par le premier pointeur (ptr) dans un état « Non Référencé » si l'indicateur (Ref) de cette ligne est dans un état « Référencé » et libérant la ligne si l'indicateur (Ref)de cette ligne est dans un état « Non Référencé » **caractérisé en ce que** ledit processus utilise un deuxième pointeur (ptr+Δ) en avance de quelques lignes sur le premier pointeur (ptr), parcourant également cycliquement la table de correspondance et place l'indicateur de la ligne pointée par ce second pointeur (ptr+Δ) dans un état « Référencé » indication d'une valeur d'attribut (Co) pour ladite ligne pointée par le second pointeur (ptr+Δ).

2. Processus de libération de lignes pour mécanisme d'antémémoire utilisant un premier pointeur (ptr) parcourant une mémoire à accès rapide de manière cyclique, chaque ligne de la mémoire à accès rapide contenant un indicateur (Ref) mis dans un état « Référencé » pour signaler qu'un processus (2) vient d'accéder à cette ligne, ledit processus mettant l'indicateur (Ref) d'une ligne pointée par le premier pointeur (ptr) dans un état « Non référence » si l'indicateur (Ref) de cette ligne est dans un état « Référencé » et libérant la ligne si l'indicateur (Ref) de cette ligne est dans un état « Non Référencé » **caractérisé en ce que** ledit processus utilise un deuxième pointeur (ptr+Δ) en avance de quelques lignes sur le premier pointeur (ptr), parcourant également cycliques, la mémoire à accès rapide et place l'indicateur de la ligne pointée par ce second pointeur (ptr+Δ) dans un état « Référencé » sur indication d'une valeur d'attribut (Co) pour ladite ligne pointée par le second pointeur (ptr+Δ).

3. Processus selon la revendication 1 ou 2, **caractérisé en ce que** la ligne pointée par le second pointeur (ptr+Δ) est libérée si l'indicateur de cette ligne a été placé dans une état « Non référencé » sur indication de la valeur d'attribut (Co) pour ladite ligne.

4. Processus selon la revendication 1 ou 2, **caractérisé en ce que** le déplacement entre le second et le premier pointeur correspond à un nombre de lignes égal à la moitié du nombre de lignes de la table.

5. Processus selon l'une des revendications précédentes, **caractérisé en ce que** la valeur d'attribut (Co) est obtenue par une fonction recevant en paramètres une consommation de pages physiques par une classe de processus applicatifs.

6. Processus selon la revendication 5, **caractérisé en ce que** la fonction évolue de façon discrète lorsque la consommation de pages physiques est supérieure à une quantité optimale de pages physiques consommables par les processus et flots d'instructions de la classe.

7. Processus selon la revendication 5, **caractérisé en ce que** la fonction évolue de façon continue et **en ce qu'**à une série de valeurs VSi de cette fonction correspond une série de pointeurs ptri telle que l'indicateur (Ref) de la ligne pointé par le pointeur ptri est mis dans l'état « Non Référencé » pour toute la valeur de la fonction supérieure à la valeur Vsi.

8. Processus de libération de pages physiques pour mécanisme d'adressage virtuel utilisant un premier pointeur (ptr) parcourait une table de correspondance (1) de manière cyclique, chaque ligne de la table de correspondance contenant un indicateur (Ref) mis dans un état « Référencé » pour signaler qu'un processus (2) vient d'accéder à cette ligne, ledit processus mettant l'indicateur (Ref) d'une ligne pointée par le premier pointeur (ptr) dans un état Non Référencé » si l'indicateur (ref) de cette ligne est dans un état « Référencé » et libérant la ligne si l'indicateur (Ref) de cette ligne est dans un état « Non Référencé » sur indication d'une première valeur d'attribut (Co) pour la dite ligne (s),
ledit processus utilise un deuxième pointeur (ptr+Δ) en avance de quelques lignes sur le premier pointeur (ptr), parcourant également cycliquement la table de correspondance et place l'indicateur de la ligne pointée par ce second pointeur (ptr+Δ) dans un état « Référencé » sur indication d'une deuxième valeur d'attribut (Co) pour ladite ligne pointée par le second pointeur (ptr+Δ).

9. Processus selon la revendication 8, **caractérisé en ce que** la ligne pointée par le second pointeur (ptr+Δ) est libéré si l'indicateur de cette ligne a été placé dans un état « Non Référencé » sur indication de la deuxième valeur d'attribut (Co) pour ladite ligne.

10. Processus selon la revendication 8 ou 9, **caractérisé en ce que** le déplacement entre le second et le premier pointeur correspond à un nombre de lignes égal à la moitié du nombre de lignes de la table.

11. Processus selon l'une des revendication 8 ou 9, **caractérisé en ce que** la première valeur d'attribut (Co) représente une consommation de pages physiques par une classe de processus applicatifs supérieure à une quantité minimale de pages physiques et **en ce que** la deuxième valeur d'attribut (Co) représente une consommation de pages physiques par une classe de processus applicatifs supérieure à une quantité optimale de pages physiques consommables par les processus et flots d'instructions de la classe.

## Claims

1. Process of deallocation of physical pages for a virtual addressing mechanism using a first pointer (ptr) browsing a look-up table (1) cyclically, each line of the look-up table containing an indicator (Ref) put into a "Referenced" state in order to indicate that a processor (2) has just accessed this line, said process putting the indicator (Ref) of a line pointed to by the first pointer (ptr) into a "Not Referenced" state if the indicator (Ref) of this line is in a "Referenced" state and deallocating the line if the indicator (Ref) of that line is in a "Not Referenced" state **characterised in that**
said process uses a second pointer (ptr+Δ) a few lines in advance of the first pointer (ptr), also cyclically browsing the look-up table, and places the indicator of the line pointed to by this second pointer (ptr+Δ) into a "Referenced" state on indication of an attribute value (Co) for said line pointed to by the second pointer (Ptr+Δ).

2. Process of deallocation of lines for a cache memory mechanism using a first pointer (ptr) browsing a rapid access memory cyclically, each line of the rapid access memory containing an indicator (Ref) put into a "Referenced" state in order to indicate that a process (2) has just accessed this line, said process putting the indicator (Ref) of a line pointed to by the first pointer (ptr) into a "Not Referenced" state if the indicator (Ref) of that line is in a "Referenced" state and deallocating the line if the indicator (Ref) of that line is in a "Not Referenced" state, **characterised in that**
said process uses a second pointer (ptr+Δ) a few lines in advance of the first pointer (ptr), also cyclically browsing the rapid access memory, and places the indicator of the line pointed to by this second pointer (ptr+Δ) into a "Referenced" state on indication of an attribute value (Co) for said line pointed to by the second pointer (Ptr+Δ).

3. Process according to Claim 1 or 2, **characterised in that** the line pointed to by the second pointer (Ptr+Δ) is deallocated if the indicator of this line has been placed in a "Not Referenced" state on indication of the attribute value (Co) for said line.

4. Process according to Claim 1 or 2, **characterised in that** the displacement between the second and the first pointer corresponds to a number of lines equal to half the number of lines in the table.

5. Process according to one of the preceding claims, **characterised in that** the attribute value (Co) is obtained by a function receiving as parameters a consumption of physical pages by a class of application processes.

6. Process according to Claim 5, **characterised in that** the function evolves discretely when the consumption of physical pages is greater than an optimum quantity of physical pages consumable by the processes and instruction streams for the class.

7. Process according to Claim 5, **characterised in that** the function evolves continuously and **in that** a series of values VSi of this function corresponds to a series of pointers ptri such that the indicator (Ref) of the line pointed to by the pointer ptri is put into the "Not Referenced" state for any value of the function greater than the value VSi.

8. Process of deallocation of physical pages for a virtual addressing mechanism using a first pointer (ptr) browsing a look-up table (1) cyclically, each line of the look-up table containing an indicator (Ref) put into a "Referenced" state in order to indicate that a process (2) has just accessed this line, said process putting the indicator (Ref) of a line pointed to by the first pointer (ptr) into a "Not Referenced" state if the indicator (Ref) of this line is in a "Referenced" state and deallocating the line if the indicator (Ref) of this line in a "Not Referenced" state on indication of a first attribute value (Co) for said line (5),
said process uses a second pointer (ptr+Δ) a few lines in advance of the first pointer (ptr), also cyclically browsing the look-up table, and places the indicator of the line pointed to by this second pointer (ptr+Δ) in a "Referenced" state on indication of a second attribute value (Co) for said line pointed to by the second pointer (Ptr+Δ).

9. Process according to Claim 8, **characterised in that** the line pointed to by the second pointer (Ptr+Δ) is deallocated if the indicator of this line has been placed in a "Not Referenced" state on indication of the second attribute value (Co) for said line.

10. Process according to Claim 8 or 9, **characterised in that** the displacement between the second and the first pointer corresponds to a number of lines equal to half the number of lines in the table.

11. Process according to one of Claims 8 or 9, **characterised in that** the first attribute value (Co) represents a consumption of physical pages by a class of application processes greater than a minimum quantity of physical pages and **in that** the second attribute value (Co) represents a consumption of physical pages by a class of application processes greater than an optimum quantity of physical pages consumable by the processes and instruction streams of the class.

## Patentansprüche

1. Prozess zum Freigeben physikalischer Seiten für einen Mechanismus zur virtuellen Adressierung unter Verwendung eines ersten Zeigers (ptr), der eine Korrespondenztabelle (1) zyklisch durchläuft, wobei jede Zeile der Korrespondenztabelle einen Merker (Ref) enthält, der in einen "gesetzten" Zustand versetzt wird, um anzugeben, dass ein Prozessor (2) gerade auf diese Zeile zugegriffen hat, wobei der Prozess den Merker (Ref) einer Zeile, auf die der erste Zeiger (ptr) zeigt, in einen "nicht gesetzten" Zustand versetzt, falls der Merker (Ref) dieser Zeile in einem "gesetzten" Zustand ist, und die Zeile freigibt, falls der Merker (Ref) dieser Zeile in einem "nicht gesetzten" Zustand ist, **dadurch gekennzeichnet, dass**
der Prozess einen zweiten Zeiger (ptr + Δ) verwendet, der dem ersten Zeiger (ptr) um einige Zeilen voreilt und die Korrespondenztabelle ebenfalls zyklisch durchläuft, und den Merker der Zeile, auf die der zweite Zeiger (ptr + Δ) zeigt, bei Angabe eines Attributwertes (Co) für die Zeile, auf die der zweite Zeiger (ptr + Δ) zeigt, in einen "gesetzten" Zustand versetzt.

2. Prozess zum Freigeben von Zeilen für einen Cache-Speicher-Mechanismus unter Verwendung eines ersten Zeigers (ptr), der einen Schnellzugriffsspeicher zyklisch durchläuft, wobei jede Zeile des Schnellzugriffsspeichers einen Merker (Ref) enthält, der in einen "gesetzten" Zustand versetzt wird, um anzugeben, dass ein Prozess (2) gerade auf diese Zeile zugegriffen hat, wobei der Prozess den Merker (Ref) einer Zeile, auf die der erste Zeiger (ptr) zeigt, in einen "nicht gesetzten" Zustand versetzt, falls der Merker (Ref) dieser Zeile in einem "gesetzten" Zustand ist, und die Zeile freigibt, falls der Merker (Ref) dieser Zeile in einem "nicht gesetzten" Zustand ist, **dadurch gekennzeichnet, dass**
der Prozess einen zweiten Zeiger (ptr + Δ) verwendet, der dem ersten Zeiger (ptr) um einige Zeilen voreilt und den Schnellzugriffsspeicher ebenfalls zyklisch durchläuft, und den Merker der Zeile, auf die der zweite Zeiger (ptr + Δ) zeigt, bei Angabe eines Attributwertes (Co) für die Zeile, auf die der zweite Zeiger (ptr + Δ) zeigt, in einen "gesetzten" Zustand versetzt.

3. Prozess nach Anspruch 1 oder 2, **dadurch gekennzeichnet, dass** die Zeile, auf die der zweite Zeiger (ptr + Δ) zeigt, freigegeben wird, falls der Merker dieser Zeile bei Angabe eines Attributwertes (Co) für diese Zeile in einen "nicht gesetzten" Zustand versetzt worden ist.

4. Prozess nach Anspruch 1 oder 2, **dadurch gekennzeichnet, dass** der Versatz zwischen dem zweiten und dem ersten Zeiger einer Anzahl von Zeilen entspricht, die gleich der halben Anzahl von Zeilen der Tabelle ist.

5. Prozess nach einem der vorhergehenden Ansprüche, **dadurch gekennzeichnet, dass** der Attributwert (Co) durch eine Funktion erhalten wird, die als Parameter einen Verbrauch physikalischer Seiten durch eine Klasse von Anwendungsprozessen empfängt.

6. Prozess nach Anspruch 5, **dadurch gekennzeichnet, dass** sich die Funktion diskret entwickelt, wenn der Verbrauch physikalischer Seiten höher ist als eine optimale Menge physikalischer Seiten, die durch die Prozesse und Befehlsmengen der Klasse verbraucht werden können.

7. Prozess nach Anspruch 5, **dadurch gekennzeichnet, dass** sich die Funktion kontinuierlich entwickelt und dass eine Reihe von Werten VSi dieser Funktion einer Reihe von Zeigern ptri entspricht, derart, dass der Merker (Ref) der Zeile, auf die der Zeiger ptri zeigt, für alle Werte der Funktion, die höher als der Wert Vsi sind, in einen "nicht gesetzten" Zustand versetzt wird.

8. Prozess zum Freigeben physikalischer Seiten durch einen Mechanismus zur virtuellen Adressierung unter Verwendung eines ersten Zeigers (ptr), der eine Korrespondenztabelle (1) zyklisch durchläuft, wobei jede Zeile der Korrespondenztabelle einen Merker (Ref) enthält, der in einen "gesetzten" Zustand versetzt wird, um anzugeben, dass ein Prozess (2) gerade auf diese Zeile zugegriffen hat, wobei der Prozess den Merker (Ref) einer Zeile, auf die der erste Zeiger (ptr) zeigt, in einen "nicht gesetzten" Zustand versetzt, falls der Merker (Ref) dieser Zeile in einem "gesetzten" Zustand ist, und die Zeile freigibt, falls der Merker (Ref) dieser Zeile bei Angabe eines ersten Attributwertes (Co) für die Zeile (s) in einem "nicht gesetzten" Zustand ist,
wobei der Prozess einen zweiten Zeiger (ptr + Δ) verwendet, der dem ersten Zeiger (ptr) um einige Zeilen voreilt die Korrespondenztabelle ebenfalls zyklisch durchläuft, und den Merker der Zeile, auf die der zweite Zeiger (ptr + Δ) zeigt, bei Angabe eines zweiten Attributwertes (Co) für die Zeile, auf die der zweite Zeiger (ptr + Δ) zeigt, in einen "gesetzten" Zustand versetzt.

9. Prozess nach Anspruch 8, **dadurch gekennzeichnet, dass** die Zeile, auf die der zweite Zeiger (ptr + Δ) zeigt, freigegeben wird, wenn der Merker dieser Zeile bei Angabe eines zweiten Attributwertes (Co) für diese Zeile in einen "nicht gesetzten" Zustand versetzt worden ist.

10. Prozess nach Anspruch 8 oder 9, **dadurch gekennzeichnet, dass** der Versatz zwischen dem zweiten und dem ersten Zeiger einer Anzahl von Zeilen entspricht, die gleich der halben Anzahl von Zeilen der Tabelle ist.

11. Prozess nach einem der Ansprüche 8 oder 9, **dadurch gekennzeichnet, dass** der erste Attributwert (Co) einen Verbrauch physikalischer Seiten durch eine Klasse von Anwendungsprozessen, der größer als eine minimale Menge physikalischer Seiten ist, repräsentiert und dass der zweite Attributwert (Co) einen Verbrauch physikalischer Seiten durch eine Klasse von Anwendungsprozessen, der größer als eine optimale Menge physikalischer Seiten, die durch die Prozesse und Befehlsmengen der Klasse verbraucht werden können, repräsentiert.
